(19) Europäisches Patentamt / European Patent Office / Office européen des brevets

(11) **EP 2 030 540 B1**

(12) **FASCICULE DE BREVET EUROPEEN**

(45) Date de publication et mention
de la délivrance du brevet:
**11.06.2014 Bulletin 2014/24**

(21) Numéro de dépôt: **08356121.7**

(22) Date de dépôt: **27.08.2008**

(51) Int Cl.:
*A47J 31/42* (2006.01)     *A47J 42/44* (2006.01)
*A47J 42/00* (2006.01)     *A47J 31/40* (2006.01)
*G01F 13/00* (2006.01)     *G01F 15/00* (2006.01)

(54) **Procédé pour mesurer la quantité de café distribuée par un moulin à café et appareil comprenant un tel moulin**

Verfahren zum Messen der ausgegebenen Kaffeemenge einer Kaffeemühle und Gerät, das eine solche Mühle umfasst

Method for measuring the amount of coffee dispensed by a coffee grinder and device comprising such a grinder

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **29.08.2007 FR 0706051**

(43) Date de publication de la demande:
**04.03.2009 Bulletin 2009/10**

(73) Titulaire: **SEB SA**
**69130 Ecully (FR)**

(72) Inventeurs:
• **Beule, Mickaël**
**14400 Crouay (FR)**
• **Lebuffe, Gilles**
**50890 Conde sur Vire (FR)**

(74) Mandataire: **Kiehl, Hubert et al**
**SEB Développement**
**Les 4 M-Chemin du Petit Bois**
**B.P. 172**
**69134 Ecully Cedex (FR)**

(56) Documents cités:
**WO-A-2007/027206     WO-A-2008/001403**

## Description

La présente invention se rapporte au domaine des appareils pour la préparation d'infusion de café, plus particulièrement des appareils du type espresso comprenant un moulin à grains de café.

Elle vise plus particulièrement un procédé pour distribuer une dose de café au moyen d'une meule d'un moulin à café entraînée en rotation par un moteur.

Dans les appareils du type précité, le procédé pour distribuer une dose de café est basé sur le comptage du nombre de tours de la meule du moulin à café. On connaît du document FR 2648035 un appareil comportant un moulin à café entraîné par un moteur électrique. Le procédé pour distribuer une dose de café repose sur le comptage du nombre de tours de la meule par un capteur qui commande l'arrêt du moteur quand a été atteint un nombre prédéterminé de tours.

Ce procédé pour distribuer une dose de café connu repose sur l'hypothèse que la quantité de café produite par tour de meule est identique quelles que soient les conditions d'utilisation du moulin. Hors dans les faits, la demanderesse a mis en évidence que la quantité de café produite par tour de meule varie de façon importante.

Un autre document, WO 2007/027 206, décrit un procédé pour mesurer la quantité de café distribuée, utilisant entre autres la mesure du courant absorbé par le moteur de la meule.

Le but de la présente invention est de proposer un procédé pour mesurer une quantité de café distribuée et un appareil mettant en oeuvre un tel procédé afin de distribuer une dose précise de café et ceci de façon répétitive.

Un autre but de l'invention est de proposer un appareil pour la préparation d'infusion de café comprenant un procédé pour distribuer une dose de café au moyen d'une meule d'un moulin à café qui soit simple et très économique à mettre en oeuvre.

A cet effet, l'invention concerne un procédé pour mesurer une quantité de café $M_{Ni}$ ou $M_{Ti}$ distribuée par une meule d'un moulin à café entraînée en rotation par un moteur sur un nombre de tours prédéterminé $N_i$ de la meule ou sur un intervalle de temps prédéterminé $T_i$, caractérisé en ce que :

- on mesure la vitesse moyenne $V_i$ de la meule sur un nombre de tours $N_i$ ou respectivement sur un intervalle de temps $T_i$;
- on en déduit la quantité ou masse $M_{Ni}$ de café distribuée sur le nombre de tours $N_i$ ou respectivement la masse $M_{Ti}$ de café distribuée sur l'intervalle de temps $T_i$ en fonction de la vitesse $V_i$, à partir d'une table de correspondance mémorisée $(V_i, M_{Ni})$ ou $(V_i, M_{Ti})$ obtenue expérimentalement.

Ce procédé présente l'avantage de déterminer avec précision la quantité de café moulu distribuée par une meule d'un moulin à café sur un nombre prédéterminé de tours de la meule ou respectivement sur un intervalle de temps prédéterminé parce que, de manière originale, on tient compte de l'influence de la vitesse de la meule sur la quantité de café distribuée par tour de meule ou par intervalle de temps.

L'invention concerne également un procédé pour distribuer une dose de café dans lequel on mesure la quantité de café distribuée au moyen du procédé précédemment décrit, caractérisé en ce que :

- on fait fonctionner la meule à intervalle de temps régulier $T_i$;
- on mesure la vitesse moyenne $V_i$ de la meule sur un intervalle de temps $T_i$;
- on en déduit la quantité ou masse $M_i$ de café distribuée sur l'intervalle de temps $T_i$ à partir d'une table de correspondance mémorisée $(V_i, M_i)$ obtenue expérimentalement.
- lorsque la somme des masses $M_i$ atteint un seuil $M_o$ prédéterminé appelé dose ou masse attendue, on arrête le moteur.

Ce procédé permet de distribuer une dose précise et répétitive de café moulu car ce dernier prend en compte l'influence de la vitesse de la meule sur la quantité de café produite par intervalle de temps pendant tout le cycle de distribution de café.

Un autre mode particulier de réalisation de l'invention concerne un procédé pour distribuer une dose de café au moyen d'une meule d'un moulin à café entraînée en rotation par un moteur, caractérisé en ce que :

- on fait fonctionner la meule pendant un temps $T_1$;
- on mesure la vitesse moyenne $V_1$ puis la masse $M_1$ de café au moyen du premier procédé décrit ;
- à partir d'une dose $M_o$ prédéterminée, on calcule la masse restante à distribuer $Mr = M_o - M_1$;
- on calcule le nombre de tours restant $Nr$ de la meule pour distribuer la masse $Mr$ en considérant que la meule va tourner à la vitesse $V_1$ à partir d'une table de correspondance mémorisée $(V_i, M_{Ti})$.
- on fait réaliser à la meule le nombre de tours restants $Nr$.

Ce procédé est un mode simplifié du procédé précédent décrit. Sur le début du cycle de distribution de café, on tient compte de l'influence de la vitesse sur la quantité produite par la mesure de cette vitesse et on considère que sur la fin du cycle la vitesse mesurée ne change pas. Cette hypothèse a été vérifiée expérimentalement par la demanderesse.

Ce procédé permet une construction simplifiée du circuit de commande du moulin à café car nécessitant peu de calcul.

Avantageusement, le temps $T_1$ est compris entre la moitié du temps $T_o$ attendu pour un cycle de distribution de café et les ⅞ de $T_o$, de préférence les ¾ de To.

Cette disposition permet de faire la mesure de la vitesse sur une grande partie du cycle de distribution d'une dose de café et ainsi d'obtenir une dose précise de café moulu même si on ne mesure plus la vitesse sur la fin du cycle de distribution.

Avantageusement, l'intervalle de temps $T_i$ est compris entre 10 millisecondes et 1 dixième de secondes, de préférence 20 millisecondes.

Cet échantillonnage de 20 millisecondes est facile à réaliser car il correspond à une alternance du secteur à la fréquence du réseau de 50 Hz. Dans le cas où la fréquence du réseau est de 60 Hertz, l'intervalle de temps $T_i$ est de préférence de 16,666 millisecondes.

Par ailleurs, l'invention se rapporte également à un appareil pour la préparation d'infusion de café comportant un moulin distribuant une dose de café au moyen du procédé objet de l'invention.

Un tel appareil comprenant un moulin à café comportant un moulin distribuant une dose de café au moyen du procédé objet de l'invention est apte à délivrer une dose précise de café, ceci de façon répétitive.

Avantageusement, l'appareil comporte une mémoire où est stockée une table obtenue expérimentalement entre la vitesse $V_i$ et la masse de café distribuée $M_{Ni}$ par nombre de tours $N_i$ ou entre la vitesse $V_i$ et la masse de café distribuée $M_{Ti}$ par intervalle de temps $T_i$.

Cette disposition permet d'adapter le procédé de distribution d'une dose de café aux caractéristiques de la meule pour obtenir une bonne précision de la dose délivrée.

L'invention sera mieux comprise à l'étude des modes de réalisation pris à titre nullement limitatif et illustrés dans les figures annexées dans lesquelles :

- La figure 1 est une vue schématique du circuit de commande d'un moteur entraînant la meule d'un moulin à café selon un mode particulier de réalisation de l'invention.

- La figure 2 illustre un exemple de table de correspondance de la quantité de café distribuée pour un tour de meule en fonction de la vitesse de la meule d'un moulin à café.

- La figure 3 illustre un exemple de table de correspondance de la quantité de café distribuée pour un temps de 20 millisecondes en fonction de la vitesse de la meule d'un moulin à café.

- La figure 4 illustre un exemple d'algorithme de fonctionnement du procédé pour distribuer une dose de café selon un premier mode de réalisation de l'invention.

- La figure 5 illustre un exemple d'algorithme de fonctionnement du procédé pour distribuer une dose de café selon un deuxième mode de réalisation de l'invention.

vention.

Seuls les éléments nécessaires à la compréhension de l'invention ont été représentés.

L'invention se rapporte à un appareil pour la préparation de café comprenant un moulin à café. Le moulin comporte une meule entraînée par un moteur via un réducteur dont le rapport de réduction est par exemple de quarante.

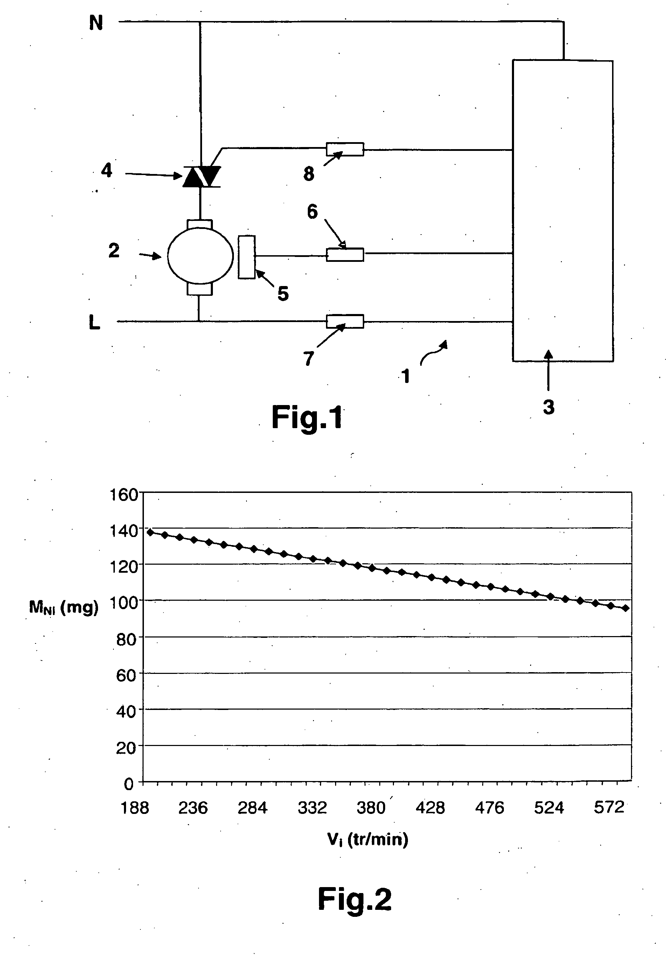

La figure 1 représente schématiquement un circuit de commande 1 d'un moteur 2 alimenté par un courant alternatif entraînant la meule d'un moulin à café. Ledit circuit de commande 1 comporte un élément de pilotage 4 du moteur 2 et un dispositif 5 de comptage du nombre de tours du moteur 2. De manière avantageuse, l'élément de pilotage du moteur est un triac 4. Le dispositif 5 de comptage du nombre de tours du moteur 2 est un capteur 5 mais peut être du type mesure d'un paramètre électrique du moteur variant avec la vitesse ou autres. Le nombre de tours réalisé par le moteur 2 permet via le rapport de réduction du réducteur de déduire le nombre de tours réalisé par la meule.

Le moteur 2 et le circuit de commande 1 sont soumis via deux bornes L et N à une tension d'alimentation alternative lorsque l'appareil est relié au réseau électrique.

Sur le circuit de commande 1 est implanté un microcontrôleur 3 contenant un programme permettant de piloter les différentes fonctions de l'appareil. Le microcontrôleur 3 reçoit sur des entrées et émet sur des sorties différentes informations. Sur une entrée 6, le microcontrôleur 3 reçoit à intervalles réguliers, une valeur du nombre de tours réalisé par le moteur. Le nombre de tours réalisé par le moteur 2 permet au microcontrôleur, via le rapport de réduction du réducteur, de déduire le nombre de tours réalisé par la meule. Sur une autre entrée 7, le microcontrôleur 3 reçoit l'image de la tension d'alimentation U ; ce qui permet audit microcontrôleur 3 de mesurer la valeur de la tension et de définir à quel instant la tension est égale à zéro ; instant appelé zéro secteur. A partir d'une sortie 8, le microcontrôleur 3 commande le triac 4.

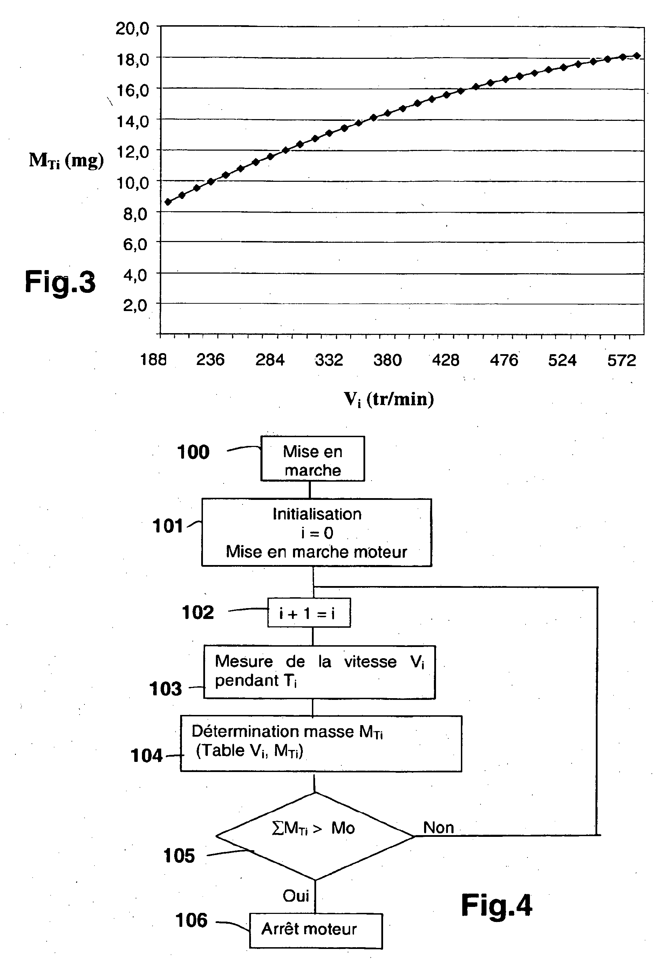

La figure 4 représente la succession d'étapes permettant à un moulin à café dont la meule est entraînée par un moteur de distribuer une dose de café moulu ; c'est-à-dire jusqu'à ce que la meule du moulin ait distribuée une masse de café prédéterminée selon un premier mode de réalisation de l'invention.

La première étape 100 représentée sur l'organigramme de la figure 4 consiste à mettre en marche le moulin à café. En pratique, pour accomplir cette étape, l'utilisateur manoeuvre un organe de commande du type interrupteur qui autorise l'alimentation électrique du circuit de commande 1 après s'être assuré que le réservoir du moulin contenait suffisamment de café en grains.

La deuxième étape 101 est une étape d'initialisation du programme du microcontrôleur 3. Cette étape comprend également la remise à zéro d'un compteur de temps inclus dans le microcontrôleur 3. L'unité de temps T de ce compteur est de préférence 20 millisecondes ce qui correspond à une alternance du secteur à la fréquence du réseau de 50 Hz. Ce compteur est réalisé par le microcontrôleur 3 à l'aide de l'entrée 7 recevant l'image de la tension d'alimentation. Le zéro secteur est l'instant où démarre chaque nouvelle unité de temps $T_i$ ou i est un indice qui s'incrémente au démarrage de chaque nouvelle unité de temps. Au cours de cette étape, le microcontrôleur 3 met en marche le moteur 2 en commandant le triac 4 au moyen de sa sortie 8.

L'étape 102 correspond à l'incrémentation du compteur par le microcontrôleur 3 au moyen de l'indice i, ce qui permet le cadencement de la base de temps et au cycle de mouture du moulin d'avancer unité de temps par unité de temps.

L'étape 103 est une étape de mesure de la vitesse $V_i$ par unité de temps $T_i$. A partir des informations du capteur 5 du nombre de tours réalisé par le moteur reçues sur son entrée 6, le microcontrôleur 3 détermine la vitesse $V_i$ de la meule par unité de temps $T_i$.

L'étape 104 est une étape de détermination de la masse $M_{Ti}$ délivrée sur l'intervalle de temps $T_i$.

Comme décrit précédemment, la demanderesse a mis en évidence que la quantité de café produite par tour de meule varie de façon importante en fonction de la vitesse de la meule et a établi expérimentalement, en fonction d'un type de meule donné, une table de correspondance de la quantité de café $M_{Ni}$ distribuée par tour de meule $N_i$ en fonction de la vitesse $V_i$ de la meule $(V_i, M_{Ni})$ (fig. 2 où $N_i$ = 1 tour).

De cette table est extrapolée la table de correspondance de la quantité de café distribuée $M_{Ti}$ par intervalle de temps prédéterminé $T_i$ en fonction de la vitesse $V_i$ de la meule $(V_i, M_{Ti})$ (figure 3 où $T_i$ = 20 millisecondes). La relation liant $M_{Ni}$ et $M_{Ti}$ a la forme :

$$M_{Ti} = (M_{Ni} \times T_i \times V_i) / N_i.$$

Le microcontrôleur 3 calcule au moyen d'une table de correspondance $(V_i, M_{Ti})$ mémorisée la masse $M_{Ti}$ délivrée sur l'intervalle de temps $T_i$.

L'étape 105 est une étape de test permettant de détecter la fin du cycle de distribution d'une dose de café. Le microcontrôleur 3 comporte un compteur qui permet de faire la somme des masses $M_{Ti}$ et une valeur mémorisée Mo correspondant à la masse attendue d'une dose de café moulu. Par exemple, Mo est égale à 7 grammes.

Le microcontrôleur compare la somme des masses $M_{Ti}$ et la valeur mémorisée Mo : Si $\Sigma\, M_{Ti}$ <Mo, le microcontrôleur repasse à l'étape 102. Si $\Sigma\, M_{Ti}$ >Mo, la masse Mo d'une dose de café est atteinte, le microcontrôleur 3 commande l'arrêt du moteur 2 au moyen de sa sortie 8.

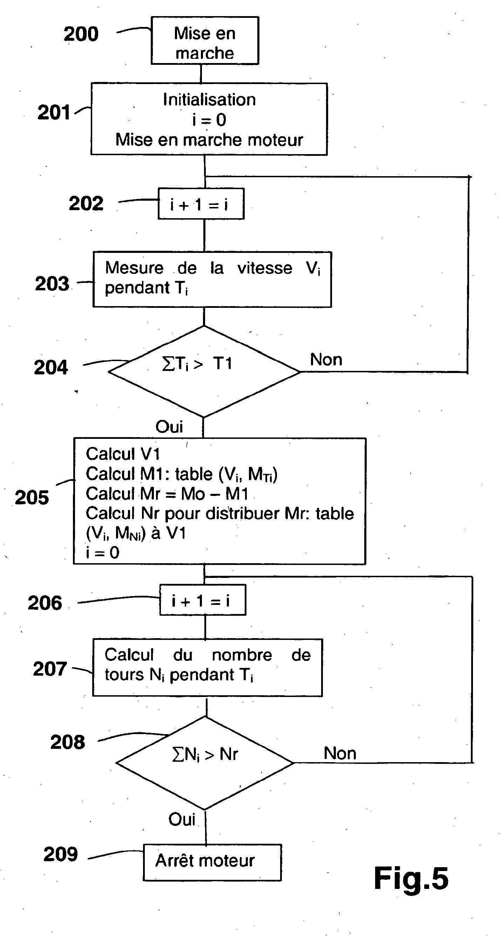

La figure 5 représente la succession d'étapes permettant à un moulin à café dont la meule est entraînée par un moteur de distribuer une dose de café moulu selon un deuxième mode de réalisation de l'invention.

Les étapes 200 (mise en marche de l'appareil), 201 (initialisation et mise en marche moteur), 202 (incrémentation du compteur) et 203 (mesure de la vitesse $V_i$) sont identiques aux étapes 100, 101, 102, 103 décrites précédemment. L'étape 204 est une étape de test permettant de détecter l'atteinte d'un temps T1 mémorisé. Le temps T1 est une fraction du temps To attendu pour réaliser un cycle de distribution de café moulu, par exemple T1 = ¾ To = 4 secondes. Le temps T1 doit être suffisamment long mais inférieur à un temps minimum pour réaliser un cycle de distribution de café moulu, c'est-à-dire un temps effectué dans des conditions de vitesse maximum.

Le microcontrôleur 3 comporte un compteur qui permet de faire la somme des temps $T_i$. Le microcontrôleur 3 compare la somme des temps $T_i$ et la valeur mémorisée T1 : Si $\Sigma\, T_i$ < T1, le microcontrôleur 3 repasse à l'étape 202. Si $\Sigma\, T_i$ >T1, le temps T1 est atteint, le microcontrôleur 3 passe à l'étape 205.

L'étape 205 est une étape de calcul du nombre de tours restant à réaliser par la meule après le temps T1 pour distribuer la masse Mo attendue d'une dose de café moulu.

Tout d'abord, le microcontrôleur 3 détermine la vitesse V1 de la meule sur le temps T1 à partir des informations du capteur 5 du nombre de tours réalisé par le moteur reçues sur l'entrée 6.

Ensuite, le microcontrôleur 3 calcule au moyen de la table de correspondance $(V_i, M_{Ti})$ mémorisée la masse de café M1 délivrée sur l'intervalle de temps T1.

Puis le microcontrôleur 3 calcule la masse Mr de café restante à distribuer pour atteindre la masse Mo attendue d'une dose de café : Mr = Mo - M1. Pour terminer, le microcontrôleur 3 détermine le nombre de tours Nr restant à réaliser pour distribuer la masse Mr au moyen de la table de correspondance $(V_i, M_{Ni})$ mémorisée en considérant que Vi est égale à V1 sur la fin du cycle de distribution de café.

Le microcontrôleur 3 initialise l'indice i et exécute l'étape 206 identique à l'étape 202.

L'étape 207 est une étape de calcul du nombre de tours $N_i$ sur un intervalle de temps $T_i$. Le microcontrôleur 3 réalise ce calcul au moyen des informations du capteur 5 du nombre de tours réalisés par le moteur reçues sur l'entrée 6.

L'étape 208 est une étape de test permettant de détecter la fin du cycle de distribution d'une dose de café. Le microcontrôleur 3 comporte un compteur qui permet de faire la somme des nombres de tours Ni.

Le microcontrôleur compare la somme des nombres de tours Ni et la valeur mémorisée Nr du nombre de tours restant à réaliser: Si $\Sigma$ Ni <Nr, le microcontrôleur repasse à l'étape 206. Si $\Sigma$ Ni > Nr, le nombre de tours de la meule nécessaire pour terminer la distribution d'une dose de café est atteint, le microcontrôleur 3 passe à l'étape 209 en commandant l'arrêt du moteur 2 au moyen de sa sortie 8.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention qui reste définie par les revendications.

## Revendications

1. Procédé pour mesurer une quantité de café $M_{Ni}$ ou $M_{Ti}$ distribuée par une meule d'un moulin à café entraînée en rotation par un moteur sur un nombre de tours prédéterminé $N_i$ de la meule ou sur un intervalle de temps prédéterminé $T_i$, **caractérisé en ce que** :

   - on mesure la vitesse moyenne $V_i$ de la meule sur un nombre de tours $N_i$ ou respectivement sur un intervalle de temps $T_i$;
   - on en déduit la quantité ou masse $M_{Ni}$ de café distribuée sur le nombre de tours $N_i$ ou respectivement la masse $M_{Ti}$ de café distribuée sur l'intervalle de temps $T_i$ en fonction de la vitesse $V_i$, à partir d'une table de correspondance mémorisée $(V_i, M_{Ni})$ ou $(V_i, M_{Ti})$ obtenue expérimentalement.

2. Procédé pour distribuer une dose de café dans lequel on mesure la quantité de café distribuée au moyen du procédé selon la revendication 1, **caractérisé en ce que** :

   - on fait fonctionner la meule à intervalle de temps régulier $T_i$;
   - on mesure la vitesse moyenne $V_i$ de la meule sur un intervalle de temps $T_i$ ;
   - on en déduit la quantité ou masse $M_i$ de café distribuée sur l'intervalle de temps $T_i$ à partir d'une table de correspondance mémorisée $(V_i, M_i)$ obtenue expérimentalement,
   - lorsque la somme des masses $M_i$ atteint un seuil Mo prédéterminé appelé dose ou masse attendue, on arrête le moteur.

3. Procédé pour distribuer une dose de café au moyen d'une meule d'un moulin à café entraînée en rotation par un moteur, **caractérisé en ce que** :

   - on fait fonctionner la meule pendant un temps $T_1$ ;
   - on mesure la vitesse moyenne $V_1$ puis la masse $M_1$ de café au moyen du procédé de la revendication 1 ;
   - à partir d'une dose Mo prédéterminée, on calcule la masse restante à distribuer Mr = Mo - $M_1$ ;
   - ou calcule le nombre de tours restant Nr de la meule pour distribuer la masse Mr en considérant que la meule va tourner à la vitesse $V_1$ à partir d'une table de correspondance mémorisée $(V_i, M_{Ti})$.
   - on fait réaliser à la meule le nombre de tours restants Nr.

4. Procédé selon la revendication 3, **caractérisé en ce que** le temps $T_1$ est compris entre la moitié du temps To attendu pour un cycle de distribution de café et les ⅞ de To, de préférence les ¾ de To.

5. Procédé selon l'une quelconque des revendications 1 à 4, **caractérisé en ce que** l'intervalle de temps $T_i$ est compris entre 10 millisecondes et 1 dixième de secondes, de préférence 20 millisecondes.

6. Appareil pour la préparation d'infusion de café comportant un moulin distribuant une dose de café au moyen du procédé selon l'une quelconque des revendications 2 à 5.

7. Appareil selon la revendication 6 **caractérisé en ce qu'**il comporte une mémoire où est stockée une table obtenue expérimentalement entre la vitesse $V_i$ et la masse de café distribuée $M_{Ni}$ par nombre de tours $N_i$ ou entre la vitesse $V_i$ et la masse de café distribuée $M_{Ti}$ par intervalle de temps $T_i$.

## Patentansprüche

1. Verfahren zum Abmessen einer Menge Kaffee $M_{Ni}$ oder $M_{Ti}$, die von einer Mahlscheibe einer Kaffeemühle ausgegeben wird, die durch einen Motor in Drehung versetzt wird, je vorgegebener Anzahl von Umdrehungen $N_i$ der Mahlscheibe oder je vorgegebenem Zeitintervall $T_i$, **dadurch gekennzeichnet, dass**:

   - die durchschnittliche Geschwindigkeit $V_i$ der Mahlscheibe je Anzahl von Umdrehungen Nj beziehungsweise je Zeitintervall $T_i$ gemessen wird,
   - ausgehend von einer experimentell ermittelten, gespeicherten Zuordnungstabelle $(V, M_{Ni})$ oder $(V_i, M_{Ti})$ davon die Menge oder Masse $M_{Ni}$ des je Anzahl der Umdrehungen $N_i$ ausgegebenen Kaffees beziehungsweise die Masse $M_{Ti}$ des je Zeitintervall $T_i$ ausgegebenen Kaffees abhängig von der Geschwindigkeit $V_i$ abgezogen wird.

2. Verfahren zur Ausgabe einer Portion Kaffee, bei dem die ausgegebene Kaffeemenge anhand des Verfahrens nach Anspruch 1 abgemessen wird, **dadurch**

**gekennzeichnet, dass**:

- die Mahlscheibe mit regelmäßigem Zeitintervall $T_i$ betrieben wird,
- die durchschnittliche Geschwindigkeit $V_i$ der Mahlscheibe je Zeitintervall $T_i$ gemessen wird,
- ausgehend von einer experimentell ermittelten, gespeicherten Entsprechungstabelle ($V_i$, $M_i$) davon die Menge oder Masse $M_i$ des je Zeitintervall $T_i$ ausgegebenen Kaffees abgezogen wird,
- wenn die Summe der Massen $M_i$ einen vorgegebenen Grenzwert Mo erreicht, der als erwartete Portion oder Masse bezeichnet wird, der Motor ausgeschaltet wird.

**3.** Verfahren zur Ausgabe einer Portion Kaffee anhand einer Mahlscheibe einer Kaffeemühle, die von einem Motor in Drehung versetzt wird, **dadurch gekennzeichnet, dass**:

- die Mahlscheibe für die Dauer einer Zeit $T_1$ betrieben wird,
- die durchschnittliche Geschwindigkeit $V_1$ und die Masse $M_1$ des Kaffees anhand des Verfahrens nach Anspruch 1 gemessen wird,
- ausgehend von einer vorgegebenen Portion Mo die verbleibende auszugebende Masse Mr = Mo - $M_1$ berechnet wird,
- ausgehend von einer gespeicherten Entsprechungstabelle ($V_i$, $M_{Ti}$) die verbleibende Anzahl der Umdrehungen Nr der Mahlscheibe berechnet wird, um die Masse Mr auszugeben, wobei berücksichtigt wird, dass sich die Mahlscheibe mit der Geschwindigkeit $V_1$ drehen wird,
- mit der Mahlscheibe die verbleibende Anzahl der Umdrehungen Nr ausgeführt wird.

**4.** Verfahren nach Anspruch 3, **dadurch gekennzeichnet, dass** die Zeit $T_1$ zwischen der Hälfte der für einen Kaffeeausgabezyklus erwarteten Zeit To und 7/8 To, vorzugsweise 3/4 To, liegt.

**5.** Verfahren nach einem der Ansprüche 1 bis 4, **dadurch gekennzeichnet, dass** das Zeitintervall $T_i$ zwischen 10 Millisekunden und 1 Zehntelsekunde, vorzugsweise 20 Millisekunden beträgt.

**6.** Gerät zur Zubereitung von aufgebrühtem Kaffee, das eine Mühle zur Ausgabe einer Portion Kaffee anhand des Verfahrens nach einem der Ansprüche 2 bis 5 umfasst.

**7.** Gerät nach Anspruch 6, **dadurch gekennzeichnet, dass** es einen Speicher umfasst, wo eine experimentell ermittelte Entsprechungstabelle zwischen der Geschwindigkeit $V_i$ und der ausgegebenen Masse Kaffee $M_{Ni}$, je Anzahl der Umdrehungen $N_i$, oder zwischen der Geschwindigkeit $V_i$ und der ausgegebenen Masse Kaffee $M_{Ti}$, je Zeitintervall $T_i$ gespeichert ist.

**Claims**

**1.** A method for measuring a quantity of coffee $M_{Ni}$ or $M_{Ti}$ dispensed by a grinding burr of a coffee mill driven in rotation by a motor on a predetermined number of revolutions $N_i$ of the grinding burr or in a predetermined time interval $T_i$, **characterised in that**:

- the average speed $V_i$ of the grinding burr is measured over a number of revolutions Nj or respectively over the time interval $T_i$;
- the quantity or mass $M_{Ni}$ of coffee dispensed is deduced during the number of revolutions $N_i$ or respectively the mass $M_{Ti}$ of coffee dispensed over the time interval $T_i$ according to the speed $V_i$, from an experimentally obtained stored correspondence table (V, $M_{Ni}$,) or ($V_i$, $M_{Ti}$).

**2.** A method for dispensing a dose of coffee wherein the quantity of coffee dispensed is measured by means of the method according to claim 1, **characterised in that**:

- the grinding burr is operated at regular time intervals $T_i$;
- the average speed $V_i$ of the grinding burr is measured over a time interval $T_i$;
- the quantity or mass $M_i$ of coffee dispensed is deduced over the time interval $T_i$ from an experimentally obtained stored correspondence table ($V_i$, $M_i$);
- when the sum of the masses $M_i$ reaches a predetermined threshold Mo called expected dose or mass, the motor is shut off.

**3.** A method for dispensing a dose of coffee by means of a grinding burr of a coffee mill driven in rotation by a motor **characterised in that**:

- the grinding burr is driven for a time $T_1$;
- the average speed $V_1$ and then the mass $M_1$ of coffee are measured by means of the method according to claim 1;
- from a predetermined dose Mo, the mass remaining to dispense Mr = Mo - $M_1$ is calculated;
- the remaining number of grinding burr revolutions Nr required to dispense the mass Mr is calculated, considering that the grinding burr will rotate at the speed $V_1$ from a stored correspondence table (($V_i$, $M_{Ti}$);
- and causing the grinding burr to perform the remaining number of revolutions Nr.

4. The method according to claim 3, **characterised in that** the time $T_1$ is between half the expected time To for a coffee dispensing cycle and 7/e of To, preferably % of To.

5. The method according to one of the claims from 1 to 4, **characterised in that** the time interval $T_i$ is between 10 milliseconds and a tenth of a second, preferably 20 milliseconds.

6. An appliance for the preparation of coffee infusions comprising a coffee mill dispensing a dose of coffee by means of the method according to any one of claims from 2 to 5.

7. An appliance according to claim 6 **characterised in that** it comprises a memory which stores experimentally obtained table between the speed $V_i$ and the mass of coffee dispensed $M_{Ni}$ per number of revolutions $N_i$ or between speed $V_i$ and the mass of coffee dispensed $M_{Ti}$ per time interval $T_i$.

**Fig.1**

**Fig.2**

**Fig.3**

$M_{Ti}$ (mg)

$V_i$ (tr/min)

**100** — Mise en marche

**101** — Initialisation
i = 0
Mise en marche moteur

**102** — i + 1 = i

**103** — Mesure de la vitesse $V_i$ pendant $T_i$

**104** — Détermination masse $M_{Ti}$ (Table $V_i$, $M_{Ti}$)

**105** — $\Sigma M_{Ti} > M_o$    Non

Oui

**106** — Arrêt moteur

**Fig.4**

**200** — Mise en marche

**201** — Initialisation
i = 0
Mise en marche moteur

**202** — i + 1 = i

**203** — Mesure de la vitesse $V_i$ pendant $T_i$

**204** — $\sum T_i > T1$    Non

Oui

**205** — Calcul V1
Calcul M1: table ($V_i$, $M_{Ti}$)
Calcul Mr = Mo – M1
Calcul Nr pour distribuer Mr: table ($V_i$, $M_{Ni}$) à V1
i = 0

**206** — i + 1 = i

**207** — Calcul du nombre de tours $N_i$ pendant $T_i$

**208** — $\sum N_i > Nr$    Non

Oui

**209** — Arrêt moteur

**Fig.5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2648035

- WO 2007027206 A